(19) Europäisches Patentamt
European Patent Office
Office européen des brevets

(11) **EP 4 773 555 A1**

(12) **EUROPEAN PATENT APPLICATION**
published in accordance with Art. 153(4) EPC

(43) Date of publication:
08.07.2026 Bulletin 2026/28

(21) Application number: 25840486.2

(22) Date of filing: 18.07.2025

(51) International Patent Classification (IPC):
**H04L 25/02** (2006.01)

(52) Cooperative Patent Classification (CPC):
**G01S 5/02; G01S 11/08; H04B 1/7163;
H04L 25/02; H04W 4/02; H04W 56/00; H04W 64/00**

(86) International application number:
**PCT/CN2025/109424**

(87) International publication number:
**WO 2026/017169 (22.01.2026 Gazette 2026/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 18.07.2024 CN 202410970217
10.07.2025 CN 202510957003

(71) Applicant: **Calterah Semiconductor Technology
(Shanghai)
Co., Ltd.
Shanghai 201210 (CN)**

(72) Inventors:
• **HAN, Zeyu**
**Shanghai 201210 (CN)**
• **ZHOU, Huiqiang**
**Shanghai 201210 (CN)**
• **LI, Wenzheng**
**Shanghai 201210 (CN)**
• **YU, Zhongxin**
**Shanghai 201210 (CN)**

(74) Representative: **Balder IP Law, S.L.
Paseo de la Castellana 93
5ª planta
28046 Madrid (ES)**

(54) **CHANNEL ESTIMATION METHOD, COHERENT COMBINING METHOD, CIRCUIT, SENSOR, AND DEVICE**

(57) The present disclosure relates to the field of wireless ranging technology and discloses a channel estimation method, a coherent combining method, a circuit, a sensor, and a device. The channel estimation method for ultra-wide band ranging includes: performing channel estimation on at least two fragments respectively to obtain channel impulse responses of the at least two fragments, where the at least two fragments originate from a same multi-millisecond (MMS) data packet; and integrating the channel impulse responses of at least two fragments to obtain the channel impulse response of the MMS data packet. The present disclosure achieves channel estimation based on a ranging packet including multiple fragments, increases the energy of channel impulse responses, enhances ranging sensitivity, and fully utilizes the advantages of the ranging packet including multiple fragments.

```
Performing channel estimation on at least two fragments to obtain
channel impulse responses of the at least two fragments, where the at
least two fragments originate from a same MMS data packet         401

                              ↓

Integrating the channel impulse responses of the at least two fragments
to obtain the channel impulse response of
the MMS data packet                                               402
```

FIG. 4

## Description

## CROSS REFERENCE TO RELATED APPLICATIONS

The present application claims priority to Chinese Patent Application No. 202410970217.9, filed on July 18, 2024, and Chinese Patent Application No. 202510957003.2, filed on July 10, 2025, each of which is incorporated by reference herein in its entirety.

## TECHNICAL FIELD

The present disclosure relates to the technical field of wireless ranging technology, and in particular to a channel estimation method, a coherent combining method, a circuit, a sensor, and a device.

## BACKGROUND

Ultra-wide band (UWB) is a wireless carrier communication technology that employs nanosecond-level non-sinusoidal narrow pulses instead of sinusoidal carriers to transmit data. Consequently, it occupies a broad spectrum range and offers advantages such as low system complexity, low transmit signal power spectral density, insensitivity to channel fading, low probability of intercept, and high positioning accuracy. It is particularly suitable for high-speed wireless access in dense multipath environments like indoor spaces. Consequently, UWB is widely applicable in the field of wireless ranging technology.

However, with the emergence of format of Multi-millisecond (MMS) data packet, existing signal processing solutions cannot fully leverage the advantages of the multi-millisecond time frame.

## SUMMARY

Embodiments of the present disclosure provide a channel estimation method, a coherent combining method, a circuit, a sensor, and a device, which achieve channel estimation based on a ranging packet including multiple fragments, increase the energy of channel impulse response, improve ranging sensitivity, and fully utilize the advantages of the ranging packet including multiple fragments.

According to some embodiments of the present disclosure, a channel estimation method for ultra-wide band (UWB) ranging is provided. The channel estimation method includes: performing channel estimation on at least two fragments respectively to obtain channel impulse responses of the at least two fragments, where the at least two fragments originate from a same multi-millisecond (MMS) data packet; and integrating the channel impulse responses of the at least two fragments to obtain a channel impulse response of the MMS data packet.

With the channel estimation method for UWB ranging in the present disclosure, the channel impulse response (CIR) for each fragment can be achieved by performing channel estimation on the at least two fragments from the same MMS data packet, where the at least two fragments may be ranging sequence fragments (RSF) or ranging integrity fragments (RIF). The CIRs of sub-fragments or multi-millisecond ranging sequences (MMRS) symbols within each fragment are then integrated to obtain the combined CIR of the MMS data packet.

Some embodiments of the present disclosure provide a channel estimation method for wireless ranging. The channel estimation method includes: performing channel estimation on at least two fragments respectively to obtain channel impulse responses of the at least two fragments, where the at least two fragments originate from a same ranging packet; and integrating the channel impulse responses of the at least two fragments to obtain a channel impulse response of the ranging packet.

Some embodiments of the present disclosure provide a CIR coherent combining method applicable to UWB ranging using a format of a frame data packet. The frame data packet includes a plurality of non-contiguous fragments, and a total time window for CIR estimation of a respective fragment of the plurality of fragments includes a plurality of sub-fragment time windows obtained for example by uniformly dividing the total time window for CIR estimation (in this case, due to the uniform division, the window lengths of the sub-fragment time windows are the same as each other), or the like. The CIR coherent combining method includes: performing CIR estimation within the plurality of sub-fragment time windows to obtain sub-fragment CIRs; acquiring at least one of a fragment frequency offset and a fragment time offset based on the sub-fragment CIRs within the respective fragment; compensating for the sub-fragment CIRs using at least one of the fragment frequency offset and the fragment time offset; and performing coherent combining based on compensated sub-fragment CIRs to obtain a total CIR of the respective fragment. And/or a total time window for CIR estimation of a respective frame includes a plurality of sub-frame time windows with fragment as a basic unit, and the plurality of sub-frame time windows may be obtained by dividing, with fragment as a basic unit, the total time window for CIR estimation into the plurality of sub-frame time windows; and the CIR coherent combining method includes: performing CIR estimation within the plurality of sub-frame time windows to obtain sub-frame CIRs; acquiring at least one of a frame frequency offset and a frame time offset based on the sub-frame CIRs within the respective frame; compensating for the sub-frame CIRs using at least one of the frame frequency offset and the frame time offset; and performing coherent combining based on compensated sub-frame CIRs to obtain a total CIR of the respective frame. In some embodiments, the compensation operation in coherent combination in the present disclosure may be carrier frequency offset compensation (CFO) for intra-fragment integration, or may be compensation for time offset (SOF) and clock drift for inter-fragment integration.

Some embodiments of the present disclosure provide an integrated circuit. The integrated circuit includes a radio frequency module, an analog signal processing module, and a digital signal processing module connected in series. The radio frequency module is configured to receive analog signals. The analog signal processing module is configured to perform down-conversion processing on the received analog signals to obtain intermediate frequency signals; and the digital signal processing module is configured to perform analog-to-digital conversion on the intermediate frequency signals, and to perform digital signal processing on data obtained from the analog-to-digital conversion. The digital signal processing performed by the digital signal processing module includes: the channel estimation method for ultra-wide band ranging as described in any embodiment of the present disclosure, the channel estimation method for wireless ranging as described in any embodiment of the present disclosure, or the CIR coherent combining method as described in any embodiment of the present disclosure.

Some embodiments of the present disclosure provide an electromagnetic wave sensor. The electromagnetic wave sensor includes: a carrier body; the integrated circuit as described above and disposed on the carrier body; and an antenna that is disposed on the carrier body or is integrated, together with the integrated circuit, into an integrated device disposed on the carrier body. The integrated circuit is connected to the antenna for transmitting and receiving signals.

Some embodiments of the present disclosure provide a terminal device. The terminal device includes: a device body, and the electromagnetic wave sensor as described above and disposed on the device body. The electromagnetic wave sensor is configured for target detection and/or communication to provide reference information for operations of the device body.

The technical solution provided in the embodiments of the present disclosure at least has the following advantages.

The channel impulse response of each fragment is no longer directly subjected to the subsequent digital signal processing. Instead, after obtaining the channel impulse responses of at least two fragments, the channel impulse responses of the at least two fragments in the ranging packet are integrated (also referred to as "combined") to obtain the channel impulse response of the ranging packet, thereby obtaining a channel impulse response with higher signal energy. In this way, the subsequent ranging can have higher sensitivity, and the advantages of ranging packets including multiple fragments can be fully utilized.

## BRIEF DESCRIPTION OF THE DRAWINGS

One or more embodiments are illustrated by corresponding figures in the accompanying drawings, which do not constitute limitations on the embodiments. Elements with the same reference numbers in the accompanying drawings are represented as similar elements, and unless otherwise specified, the figures in the accompanying drawings do not constitute scale limitations.

FIG. 1 is a schematic diagram illustrating an application scenario of UWB technology in automobiles;

FIG. 2 is a schematic diagram showing a structure of a UWB MMS data packet according to some embodiments of the present disclosure;

FIG. 3 is a schematic diagram showing another structure of a UWB MMS data packet according to some embodiments of the present disclosure;

FIG. 4 is a first flowchart of a channel estimation method for UWB ranging according to some embodiments of the present disclosure;

FIG. 5 is a second flowchart of the channel estimation method for UWB ranging according to some embodiments of the present disclosure;

FIG. 6 is a third flowchart of the channel estimation method for UWB ranging according to some embodiments of the present disclosure;

FIG. 7 is a fourth flowchart of the channel estimation method for UWB ranging according to some embodiments of the present disclosure;

FIG. 8 is a fifth flowchart of the channel estimation method for UWB ranging according to some embodiments of the present disclosure;

FIG. 9 is a sixth flowchart of the channel estimation method for UWB ranging according to some embodiments of the present disclosure;

FIG. 10 is a flowchart of a channel estimation method for wireless ranging according to some embodiments of the present disclosure; and

FIG. 11 is a schematic diagram of a structure of an integrated circuit according to some embodiments of the present disclosure.

## DETAILED DESCRIPTION OF EMBODIMENTS

To clarify the objectives, technical solutions, and advantages of the embodiments of the present disclosure, the various embodiments will be described in detail below with reference to the accompanying drawings. However, those skilled in the art will understand that numerous technical details have been provided in the embodiments of the present disclosure to facilitate the reader's understanding. Nevertheless, the technical solutions claimed herein may be achieved even without these technical details and various modifications and variations based on the embodiments described below.

The division into the following embodiments is for the sake of description and should not be construed as limiting the specific implementation of the present disclosure. The embodiments may be combined and referenced with one another without contradiction.

The Car Connectivity Consortium (CCC) protocol is a solution based on the 802.15.4z standard for exchanging Ultra-wide band (UWB) ranging data packets (i.e., ranging packets), where two message types SP0 and SP3 are defined. SP0 is used for ranging control messages (i.e., pre-polling) and ranging report messages (i.e., final data), SP3 is used for RFRAME (i.e., polling/response/final), and three RFRAMEs are exchanged between a pair of initiators and responders. The transmission time, communication delay, and synchronization accuracy of SP0 signals are key factors affecting ranging accuracy, making SP0 the bottleneck of ranging distance.

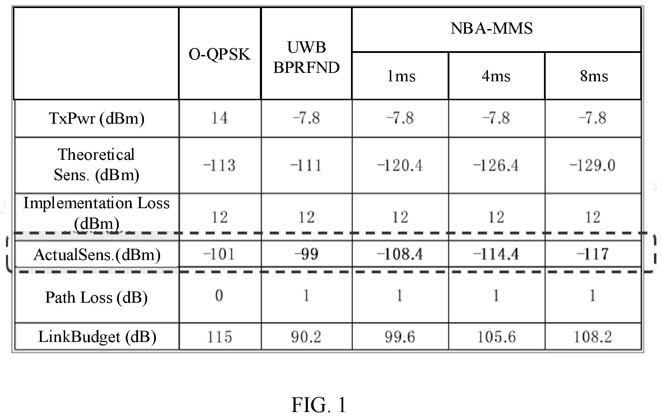

Taking automotive application scenarios as an example, introducing multi-millisecond-level data is expected to achieve an 18-decibel (dB) improvement in link budget through NBA-MMS (NBA is the abbreviation for "Narrow Band Assisted"). FIG. 1 shows the link budget comparisons under different conditions for offset-Quadrature Phase Shift Keying (O-QPSK), Ultra-wide band Base Pulse Repetition Frequency Non-Data (UWB BPRF ND), and NBA-MMS, and in particular shows the performance improvement when MMS is introduced. As shown in FIG. 1, TxPwr represents the transmit power in dBm; Theoretical Sens. represents the theoretical sensitivity in dBm; Implementation Loss represents the implementation loss in dB; Actual Sens. represents the actual sensitivity in dBm; Path Loss represents the path loss in dB; and Link Budget represents the link budget in dB. As illustrated in FIG. 1, the 18dB link budget improvement primarily targets RFRAME without data, but in CCC scenarios, data-containing SP0 control and report messages must be exchanged during ranging rounds. As the NBA-MMS time increases from 1ms to 8ms, the link budget significantly improves, rising from 99.6dB to 108.2dB. Compared to O-QPSK and UWB BPRF ND, NBA-MMS significantly enhances sensitivity despite its lower transmit power, yet still achieves a higher link budget, which demonstrates that this improvement is particularly notable when MMS is introduced.

If the control and reporting messages in the control and reporting phase utilize SP0, according to calculations, only a data rate of 110 kbps (kilobits per second) can meet the 1ms MMS gain requirement. In other words, the link budget gain of UWB-driven MMS is constrained by the control and reporting phase. Methods to leverage MMS gain include but are not limited to: NBA-MMS and OOB (Out of Band) assisted MMS, where OOB assisted MMS means shifting the link overhead of the control and reporting phase to OOB (e.g., BLE (Bluetooth Low Energy)). However, due to unclear spectrum regulations for UNII-3 and UNII-5 (e.g., in China), NBA-MMS lacks a mature market, and both the user side (car key or smartphone) and the vehicle side must support NBA-MMS. Given the relatively lengthy technical upgrade process by automakers, NBA-MMS may take longer to become practical though BLE already exists. That is, OOB-assisted MMS will play a crucial role in achieving MMS link budget gain in terms of ranging distance.

Since UWB is a power-limited system, the maximum transmit power is -41.3 dBm/MHz. This means that within a 1 MHz bandwidth, the maximum transmit power of UWB devices is -41.3 dBm, where dBm is a power unit representing decibels relative to a milliwatt (mW) baseline. This means that within a 500 MHz bandwidth, the maximum transmit power of a UWB device is -14.3 dBm, or -14.3 dBm/500 MHz. Testing involves statistical measurement of received power over a 1 ms cycle. Therefore, within 1 ms, the energy transmitted at -14.3 dBm is 37 nanojoules (nJ): -14.3 dBm $\times$ 1 ms = 37 nJ. For UWB systems with limited transmit power, both the number of pulses and the power are constrained.

In order to improve sensitivity, the IEEE802.15.4ab protocol mentions the strategy of using 1200RSTU (Ranging Scheduled Time Unit) (1200RSTU is 1 millisecond) to send one fragment, as well as multiple 1 millisecond (ms) to send multiple fragments, known as multi millisecond UWB technology. In UWB systems, due to the limitation of transmission power, the power of each transmission fragment is restricted. This means that a single fragment may not provide sufficient signal strength to achieve high-precision ranging. Therefore, to enhance system sensitivity, the received signal energy can be increased by either boosting the number of fragments or increasing the repetition rate of fragments. For example: transmitting one fragment per 1ms, or transmitting multiple fragments over multiple 1ms intervals.

Simultaneously, time synchronization (SYNC) signals and start frame delimiters (SFD) may be exchanged between the first UWB device and the second UWB device for UWB ranging, in order to ensure accurate time synchronization and correct identification of data frames. The purpose of SYNC signal is to synchronize the clocks of the first UWB device and the second UWB device before the start of UWB ranging, while SFD is to enable the second UWB device to correctly identify and locate the start of the data frame, in order to accurately decode and process the received data. Based on this, the embodiment of the present disclosure provides a ranging packet format for exchanging SYNC signals and SFD between a first UWB device and a second UWB device for UWB ranging without affecting the UWB ranging performance.

That is, in order to ensure the accuracy and reliability of UWB ranging, embodiments of the present disclosure provide an MMS data packet that is exchanged between a first UWB device and a second UWB device for UWB ranging. Its content includes SYNC signal and SFD to achieve UWB signal synchronization, ensuring accurate time synchronization and correct identification of data frames. Specifically, through this ranging packet, SYNC and SFD exchange between the first UWB device and the second UWB device can be achieved without affecting UWB ranging performance, ensuring accurate time synchronization and correct identification of data frames, thereby providing guarantees for the accuracy and reliability of the UWB ranging.

For the MMS data packet, in an exemplary instance, during the ranging phase of UWB MMS ranging, it may include: one or more SYNC signals and SFDs (hereinafter referred to as SYNC+SFD fragments) exchanged, starting from the first fragment, between a first UWB device acting as the initiator and a second UWB device acting as the responder. This achieves time synchronization between the initiator and responder, ensuring the accuracy and reliability of the UWB ranging.

In some embodiments, during the ranging phase of UWB MMS ranging, the MMS data packet may include: one or more SYNC+SFD fragments continuously exchanged, starting from the first fragment, between the initiator and responder for UWB ranging, and each fragment includes a SYNC+SFD fragment.

In some embodiments, during the ranging phase of UWB MMS ranging, the MMS data packet may include: the SYNC+SFD fragment exchanged between the initiator and responder for UWB ranging via the first fragment. That is, during the ranging phase of UWB MMS ranging, the initiator of UWB ranging transmits the SYNC+SFD fragment as the first fragment to the responder; the responder of UWB ranging transmits the SYNC+SFD fragment as the first fragment to the initiator to achieve the exchange of the SYNC signal and SFD between the initiator and responder. Thus, without compromising UWB ranging performance, the SYNC and SFD are exchanged between the initiator and the responder by exchanging the aforementioned MMS data packet. This ensures precise time synchronization and accurate data frame identification, thereby safeguarding the accuracy and reliability of the UWB ranging.

During the control phase of UWB MMS ranging, the MMS data packet may include: auxiliary information that is exchanged through OOB between the initiator and responder of UWB ranging and configured to assist either of the initiator and responder in determining the reception of the SYNC+SFD fragment from the other one during the ranging phase.

In an exemplary instance, the auxiliary information may include any one or any combination of the following:

Time offset information is used to determine a time offset at which the initiator and the responder begin receiving the first fragment after entering the ranging phase of UWB MMS ranging.

Sequence configuration information is used for determining a length of the SYNC+SFD fragments, i.e., the duration of the SYNC+SFD fragments. The sequence configuration information can also be used to determine the SYNC length or the SFD length. It should be noted that the SYNC length is determined based on the sequence configuration information, and the SFD length can be calculated from the SYNC length. Therefore, it can be assumed that the SFD length and the total length of the SYNC+SFD fragment can also be considered determined by the sequence configuration information.

In some embodiments, the sequence configuration information may include, but is not limited to, the sequence length that determines the duration of the SYNC+SFD fragments, and may further include: the spread factor that determines the signal anti-interference capability and ranging accuracy. Here, the sequence length refers to the total length of the signal sequence that constitutes the SYNC fragment, indicated by the number of chips or the number of bits. For example, if the sequence length of the SYNC fragment is N chips and the sequence length of the SFD fragment is M chips, the total length of the SYNC+SFD fragment is N+M chips. The spreading factor determines how the signal expands in the frequency domain. By configuring the spreading factor, the system can adjust the anti-interference ability of the SYNC+SFD fragments. For instance, a higher spreading factor expands the signal to a broader frequency band, thereby enhancing the anti-interference ability and enabling the system to detect and synchronize signals more reliably in environments with high noise or interference.

The time-domain correspondence: because the control phase of UWB MMS ranging is transmitted through OOB such as BLE signals, and the ranging phase of UWB MMS ranging is based on UWB signals, is used to represent the time correspondence between different time domains of the control phase and the ranging phase. In some embodiments, the time-domain correspondence is the correspondence between BLE time and UWB time.

In an exemplary instance, the MMS data packet may further include: a ranging fragment exchanged between the initiator and the responder after time synchronization is completed during the ranging phase, to enable the MMS data packet to support ranging implementation.

In an exemplary instance, the MMS data packet may further include: ranging reports sent / received by the initiator and the responder in the report phase after completing the sending and receiving of all fragments in a round of ranging polling, i.e., after the ranging phase ends.

Of course, when the reporting phase is not enabled, such as when the ranging reports are transmitted through the OOB mechanism, the round of ranging polling completes after all fragments have been sent and received, and the MMS data packet may not include the ranging reports.

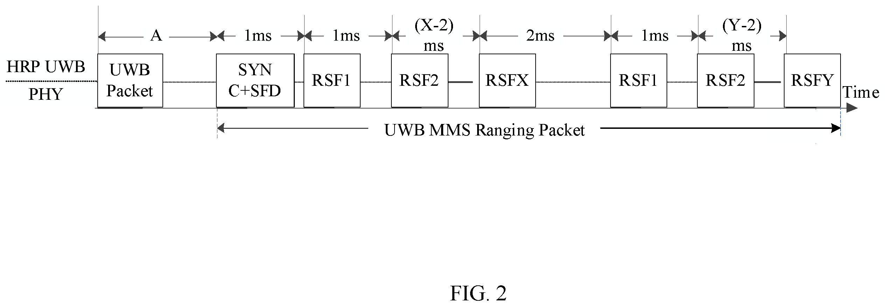

In some embodiments, as shown in FIG. 2, the High Rate Pulse Advanced Responder Device (HRP-ADEV) based on the High Rate Pulse Repetition Frequency ultra-wide band (HRP UWB PHY) supports a mode of the UWB MMS data packet to enhance UWB ranging sensitivity. The MMS data packet (UWB Packet, i.e., ranging packet) of the HRP UWB PHY may include a SYNC+SFD fragment located in the first fragment, where the value of time interval A is 1ms. Here, time interval A represents the time interval between the start of the packet in the control phase and the start of the MMS data packet in the ranging phase. In FIG. 2, X denotes the number of RSF fragments, and Y denotes the number of RIF fragments, and the values of X and/or Y may be zero.

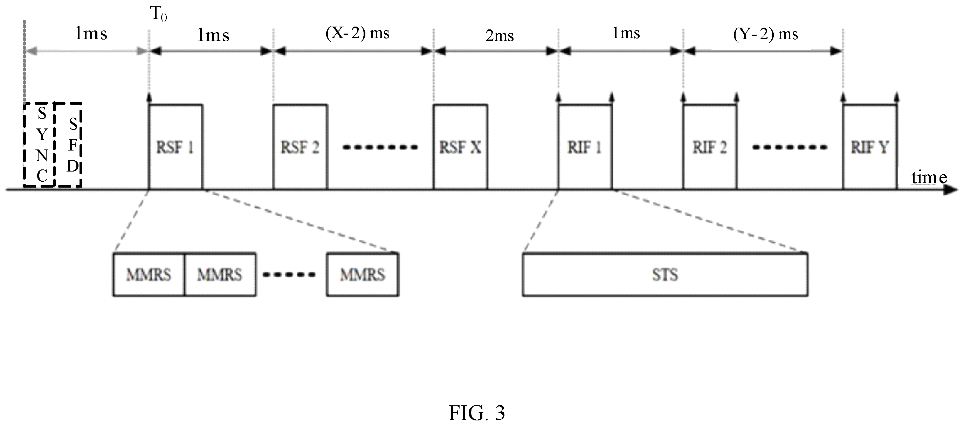

In some embodiments, the multi-millisecond UWB technology in CCC protocol refers to that UWB signals are distributed in multiple 1-millisecond short pulses (i.e. fragment). Therefore, MMS UWB can include combinations of multiple Ranging Sequence Fragments (RSFs) and/or multiple Ranging Integrity Fragments (RIFs) to improve UWB ranging sensitivity. As shown in FIG. 3, the format of the UWB MMS ranging packet includes first synchronization (SYNC) to obtain synchronization and frequency offset, followed by RSF within 1ms and RIF within 1ms, such as RSF1, RSF2... RSFx, RIF1, RIF2... RSFy in FIG. 3.

The SYNC (Synchronization Field) is located at the beginning of the UWB frame structure and is used to achieve time-domain synchronization of the transmitting and receiving devices. It repeats a specific number of times through a predefined pulse sequence (such as ternary code: 1, 0, -1 represents positive pulse, no pulse, negative pulse, respectively) to help the receiving end lock the starting position of the signal and adjust the clock phase. In the IEEE 802.15.4z standard, the length of the SYNC field can be configured to 16, 64, 1024, or 4096 preamble symbols, which correspond to four synchronization modes: short, default, medium, and long. This low cross-correlation code sequence design allows multiple devices to work in parallel on the same channel without interference.

The SFD, immediately following the SYNC field, identifies the formal start position of the physical layer frame, triggering the receiver to begin parsing the physical layer header (PHR) and subsequent payload. The specific symbol sequence of the SFD (e.g., 8 or 64 symbols in length) is unique, facilitating precise detection of frame boundaries. For instance, the short frame SFD sequence is [0, +1, 0, -1, +1, 0, 0, -1], suitable for high-rate transmission (>800 kbps); the long frame SFD is used for low-rate, long-distance scenarios (110 kbps). In ranging applications, the detection timing of SFD serves as the starting and ending trigger point for time-of-flight (ToF) measurement, directly impacting ranging accuracy.

RSF (Ranging Sequence Fragment) is a core parameter for multi-millisecond signal configuration in the 802.15.4 HRP UWB protocol, and is configured for segmented transmission of ranging sequences to enhance sensitivity and anti-interference capabilities. For details, refer to: https://mentor.ieee.org/802.15/dcn/24/15-24-0403-01-04ab-proposed-resolution-for-uwb-driven-mms-and-oob-assisted-mms.docx. The number of RSF fragments can be configured as 0, 1, 2, 4, or 8, with gaps between fragments to optimize average signal power calculations. Each RSF may repeat the MMRS sequence (e.g., 32, 40, 48 times), supporting flexible link budget adjustments. In NBA-UWB schemes, coherent superposition is achieved by combining multiple RSFs, significantly improving ranging signal-to-noise ratio.

MMRS (Multi-Millisecond Ranging Sequence) is a critical sequence type in NBA-UWB multi-user bandwidth sharing (MMS) operations to generate highly anti-interference ranging signals. The sequence length may be selected from 128, 91, or 127 symbols, and may be designed based on complementary codes or ternary codes to reduce cross-correlation (e.g., the code index for a length-128 complementary code is 33-48). It adopts zero-insertion interval configurations (e.g., inserting zero or multiple zero pulses) to further optimize spectrum utilization and interference suppression. Typical application scenarios include hybrid MMS configurations (where the numbers of RSF and the numbers of RIF pulse are consistent), and pure UWB-MMS configurations (HPRF (High Pulse Repetition Frequency) sets based on IEEE 802.15.4z).

RIF (Ranging Integrity Fragment) is configured to enhance the security of the ranging phase by preventing distance-shortening attacks (such as delay injection attacks) through encryption and integrity verification. RIF operates in conjunction with RSF together: RSF determines the Time of Arrival (ToA), while RIF verifies the integrity of the ToA. The configuration parameters include the number of fragments, length, and interval from the last RSF (usually 1ms), and support AES (Advanced Encryption Standard) -128 encryption to ensure that the signal is not forged.

In the 802.15.4ab standard, RIF design is still under discussion and may adopt STS (Scrambled Timestamp Sequence) waveform or introduce new schemes.

It can be seen from FIG. 2 and FIG. 3 that each ranging sequence fragment and ranging integrity fragment (also known as ranging integrity fragment) are discontinuous. Here, "discontinuous" means that after one fragment is transmitted/received, there is an interval before the next fragment is transmitted/received. This discontinuity arises due to idle periods between fragment transmission and reception. In order to reduce power consumption or better support scheduling between high-level users, there should be a situation where the receiver is temporarily turned off or in idle. Thus, the Channel Impulse Response (CIR) of each fragment is generated at intervals.

Based on this, some embodiments of the present disclosure provide a channel estimation method, a coherent combining method, a circuit, a sensor, and a device, which improve sensitivity by combining channel impulse responses. Specifically, based on the implementation of UWB MMS technology in the CCC protocol which is to distribute UWB signals in multiple short pulses (i.e. fragment) of 1ms, a implementation of UWB MMS to improve UWB ranging sensitivity by combining multiple ranging sequence fragments and/or multiple ranging integrity fragments is provided.

Some embodiments of the present disclosure provide a channel estimation method for UWB ranging, which achieves the combining of channel impulse responses by integrating the channel impulse responses of several fragments in MMS data packets, thereby increasing the signal energy of channel impulse responses, and achieving ranging with higher sensitivity based on channel impulse responses having higher energy. The following description will illustrate the method using different flowcharts.

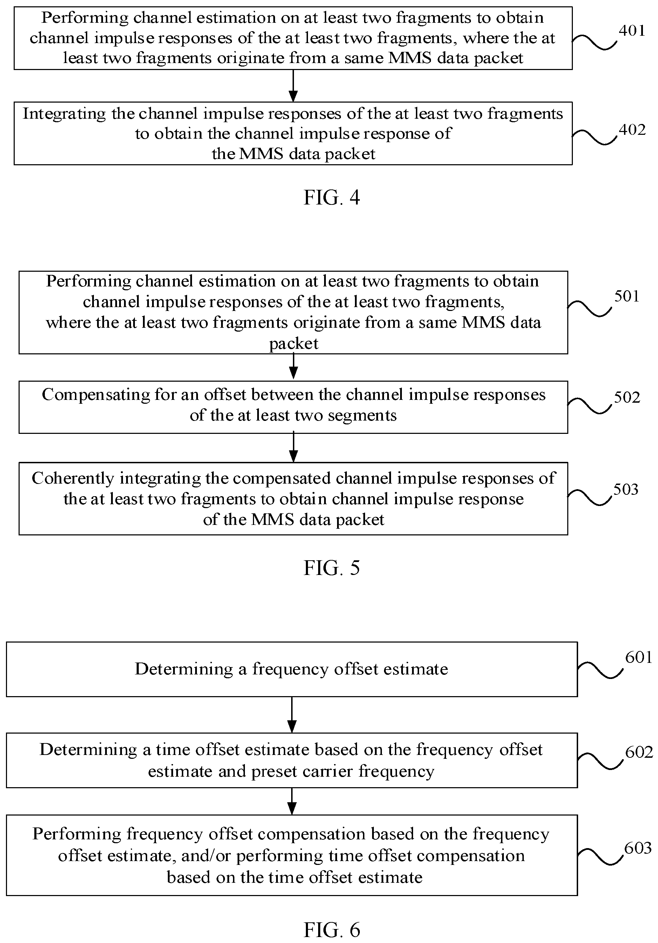

In some embodiments, as shown in FIG. 4, the channel estimation method for UWB ranging includes the following operations:

    Operation 401: performing channel estimation on at least two fragments respectively to obtain channel impulse responses of the at least two fragments, where the at least two fragments originate from a same MMS data packet.

    Operation 402: integrating the channel impulse responses of the at least two fragments to obtain a channel impulse response of the MMS data packet.

In the embodiment shown in FIG. 4, the channel impulse response of each fragment is no longer directly subjected to the subsequent digital signal processing. Instead, after obtaining the channel impulse responses of at least two fragments, the channel impulse responses of the at least two fragments in the ranging packet are integrated to obtain the channel impulse response of the ranging packet, thereby obtaining a channel impulse response with higher signal energy. In this way, the subsequent ranging can have higher sensitivity, and the advantages of ranging packets including multiple fragments can be fully utilized.

For ease of understanding, the operations of the embodiment shown in FIG. 4 will be illustrated below.

In operation 401, channel estimation is performed on the at least two fragments respectively to obtain channel impulse responses of the at least two fragments, where the at least two fragments originate from a same MMS data packet. In the embodiments of the present disclosure, the MMS data packet includes fragments each including a synchronization field and a start frame delimiter. In some embodiments, the fragments may be exchanged between the ranging initiator and the ranging responder during a one-to-many multi-millisecond ranging process and an out-of-band channel multi-millisecond ranging process.

In some embodiments, the structure of the MMS data packet may, as shown in FIG. 3, includes: ranging sequence fragments (RSF) 1, ..., ranging sequence fragment X, and ranging integrity fragment (RIF) 1, ..., ranging integrity fragment Y, where X and Y are positive integers.

As previously described, the receiver is turned off or in idle during the intervals between transmission and reception of fragments, resulting in intervals between the channel impulse responses of the fragments. Of course, even if the receiver remains active during these intervals between transmission and reception of fragments, channel estimation is still performed on the at least two fragments respectively. Consequently, there is no need to wait until the complete MMS data package is acquired before starting processing, making more efficient use of time, higher processing efficiency, better real-time performance of the output, and better user experience.

It should be noted that the embodiments of the present disclosure do not limit the number of fragments on which is performed, the number may be 2, 5, 10, etc., or the channel estimation may be performed on even all fragments.

It should be noted that each fragment in operation 401 is deemed as an individual reception signal for channel estimation. Therefore, the solutions of channel estimation based on reception signals in related technologies are also applicable to the implementation of operation 401, and need not be elaborated here.

In operation 402, the channel impulse responses of the at least two fragments are integrated to obtain the channel impulse response of the MMS data packet. As previously described, the channel impulse responses of multiple fragments of a same MMS data packet are generated at intervals. Through the integration processing in this operation, the channel impulse responses of the fragments are combined, thereby obtaining the channel impulse response of the MMS data packet. Compared to direct simple concatenation, through integration, the channel impulse response will have higher energy, thereby supporting ranging with higher sensitivity.

It should be noted that there may be an offset between the transmission and between the reception of different fragments due to the time intervals, and the offsets may not be equal to each other. If directly combined, it is not conducive to subsequent processing and affect the accuracy and reliability of the processing. Moreover, considering that the ranging sequence fragment is mainly used for ranging and has high ranging accuracy, and the ranging integrity fragment, due to the use of encryption and other processing, has high security and is mainly used for verifying security ranging, i.e. they are used for different purposes. Thus, they are usually not combined between CIRs for use. Therefore, channel estimation may be performed on all fragments of the MMS data packet, but the channel impulse responses of all fragments are not be integrated together. Instead, the channel impulse responses of the ranging sequence fragments and the channel impulse responses of the ranging integrity fragments are separately integrated for subsequent use in different processing.

Therefore, the embodiments of present disclosure actually break through in the conventional processing approach by integrating (also known as "combining") the channel impulse responses of the at least two fragments in the ranging packet to obtain the channel impulse response of the ranging packet, thereby obtaining a channel impulse response with higher signal energy. In this way, making the subsequent ranging can have higher sensitivity, and the advantages of the ranging packet including multiple fragments can be fully utilizing.

It should also be noted that in this operation, the integrated channel impulse responses may be the channel impulse responses of the ranging sequence fragments, or may be the channel impulse responses of the ranging integrity fragments. However, it is not recommended that the integrated channel impulse responses are partially the channel impulse responses of the ranging sequence fragments, and partially are the channel impulse responses of the ranging integrity fragments, nor that the integrated channel impulse responses originate from different MMS data packets.

In some embodiments, the at least two fragments include all ranging sequence fragments of the MMS data packet, or at least two fragments include all ranging integrity fragments of the MMS data packet. Thus, the information carried by the MMS data packet can be utilized for more comprehensive and accurate ranging, positioning, and other processing, or for more comprehensive and accurate security ranging verification and other processing.

In some embodiments, the channel impulse response of the at least two ranging sequence fragments from the same MMS data packet may be integrated, and/or the channel impulse response of the at least two ranging integrity fragments from the same MMS data packet may be integrated. Thus, the channel impulse response for ranging and/or the channel impulse response for security ranging verification of the MMS data packet can be obtained.

It is noted that integration includes coherent integration and incoherent integration, both of which are applicable to this operation. Incoherent integration offers simplicity, efficiency, and good real-time performance, and coherent integration offers minimal performance loss. Selection may be made based on application scenarios, user requirements, and other factors.

Taking coherent integration as an example, the integration of channel impulse responses of at least two fragments may be achieved using the following expression:

$$CIR_{\text{final}} = \sum_{k'=1}^{K} CIR_{k'} \,.$$

Herein $CIR_{\text{final}}$ represents the channel impulse response of the MMS data packet, $CIR_{k'}$ represents the channel impulse response of the *k' th* fragment, and K represents the total number of fragments of which the channel impulse responses are integrated, where $2 \le K \le K1$, $K1$ is the total number of the ranging sequence fragments or the ranging integrity fragments included in an MMS data packet.

On the basis of the aforementioned embodiments, considering that the performance loss using coherent integration is minimal, coherent integration may be used to process the channel impulse responses of different fragments, thereby reducing the signal performance loss of the MMS data packet. Further analysis reveals that since the fragments in the MMS data packet are discontinuous, the offsets between different fragments may vary, which is not conducive to ranging. Accordingly, in some embodiments, as illustrated in FIG. 5, the channel estimation method for UWB ranging includes the following operations:

Operation 501: performing channel estimation on at least two fragments to obtain channel impulse responses of the at least two fragments, where the at least two fragments originate from a same MMS data packet.

Operation 502: compensating for an offset between the channel impulse responses of the at least two fragments.

Operation 503: performing coherent integration on the compensated channel impulse responses of the at least two fragments to obtain the channel impulse response of the MMS data packet.

On the basis of the aforementioned embodiments, coherent integration is used to reduce performance loss. When coherent integration is applied, offset compensation is used before integration, which can improve the ranging sensitivity of channel impulse responses and achieve better ranging effect, and can preventing offset interference caused by discontinuous transmission and reception, making integration more accurate. Based on this, ranging, positioning and other processing are also more accurate and reliable.

To facilitate understanding of the embodiment shown in FIG. 5, the operations will be explained below. Operations 501 and 503 are substantially identical to previously illustrated operations 401-402 and will not be repeated here.

In operation 502, compensating for the offset between the channel impulse responses of the at least two fragments. In the embodiments of the present disclosure, the compensated channel impulse responses may all be the channel impulse responses of the ranging sequence fragments, or may all be the channel impulse responses of the ranging integrity fragments. However, the compensated channel impulse responses cannot be the channel impulse responses of the fragments originate from different MMS data packets, nor being the channel impulse responses of the ranging sequence fragments and of the ranging integrity fragments of the same MMS data packet.

It should be noted that based on the characteristics of UWB, offset compensation may be divided into two aspects: time offset compensation and frequency offset compensation. That is, in some embodiments, as shown in FIG. 6, compensating for the offset may be achieved by:

Operation 601: determining a frequency offset estimation.

Operation 602: determining the time offset estimation based on the frequency offset estimation and a pre-configured carrier frequency.

Operation 603: performing frequency offset compensation based on the frequency offset estimate, and/or performing time offset compensation based on the time offset estimation.

To facilitate understanding of the embodiment shown in FIG. 6, the operations are explained below.

In operation 601, determining the frequency offset estimation. The embodiments of the present disclosure do not limit the implementation of frequency offset estimation. Related technologies have recorded schemes for frequency offset estimation for two or more signals, and these schemes are also applicable to this operation. Therefore, they will not be repeated here. The following provides examples of frequency offset estimation from two perspectives: differential method and Discrete Fourier Transform (DFT) method.

In the differential method, the correlation coefficients at tap positions of the channel impulse responses of the fragments participating in frequency offset compensation are firstly determined, which may be achieved using the following expression:

$$D^{(t)} = \sum_{k'=2}^{K} CIR_{k'}^{(t)} \cdot \left( CIR_{k'-1}^{(t)} \right)^{*}.$$

Here, $D^{(t)}$ is the correlation coefficient at the $t$-th tap, $K$ is the total number of fragments participating in frequency offset compensation, and $CIR_{k'}^{(t)}$ is the value of the channel impulse response at the $t$-th tap of the $k'$ -th fragment participating in frequency offset compensation, where $2 \leq K \leq K1$, $K1$ is the total number of fragments included in the MMS data packet; $\left( CIR_{k'-1}^{(t)} \right)^{*}$ is the conjugate of $CIR_{k'-1}^{(t)}$, and $CIR_{k'-1}^{(t)}$ is the value of the channel impulse response at the t-th tap of the ($k'$ - 1)-th fragment participating in frequency offset compensation.

Then, the tap position where the correlation is maximized is determined. This can be achieved using the following expression:

$$t^* = \underset{t'}{\operatorname{argmax}} \left| D^{(t)} \right|;$$

Here, t*represents the tap position where correlation is maximized, $\underset{t'}{\operatorname{argmax}} \left| D^{(t)} \right|$ represents the operation to determine $t'$ when $|D^{(t)}|$ has the maximum value. $|D^{(t)}|$ is absolute value of $D^{(t)}$, and $D^{(t)}$ has been explained above and will not be repeated here.

Finally, the frequency offset estimate is determined based on t*. This can be achieved through the following expression:

$$f_c = \frac{\operatorname{ang}\left[ D^{(t^*)} \right]}{2 \times \pi \times T_{gap}};$$

Here, $f_c$ represents the result of frequency offset estimation, ang[$D^{(t^*)}$] represents an angle value corresponding to $D^{(t^*)}$, $D^{(t^*)}$ has been explained above, and $T_{gap}$ is a preset parameter indicating the CIR time interval.

In the DFT method, DFT is performed at a same tap position of the channel impulse responses of the fragments participating in frequency offset compensation. Subsequently, the peak positions and amplitudes of the DFT results are determined. This can be achieved through the following expression:

$$I^{(t)} = \underset{1 \leq k \leq K_l}{\operatorname{argmax}} \left| \operatorname{DFT}\left[ \left\{ CIR_k^{(t)} \right\} \right] \right| - 1;$$

$$A^{(t)} = \underset{1 \leq k \leq K_l}{\operatorname{max}} \left| \operatorname{DFT}\left[ \left\{ CIR_k^{(t)} \right\} \right] \right|;$$

Here, $I^{(t)}$ represents the peak position corresponding to the $t$ -th tap, $\underset{1 \leq k \leq K_l}{\operatorname{argmax}} \left| \operatorname{DFT}\left[ \left\{ CIR_k^{(t)} \right\} \right] \right|$ represents a value of $k$ when $\left| \operatorname{DFT}\left[ \left\{ CIR_k^{(t)} \right\} \right] \right|$ is determined to have the maximum value within the range $1 \leq k \leq K_l$, $\left| \operatorname{DFT}\left[ \left\{ CIR_k^{(t)} \right\} \right] \right|$ represents the absolute value of $\operatorname{DFT}\left[ \left\{ CIR_k^{(t)} \right\} \right]$, $\operatorname{DFT}\left[ \left\{ CIR_k^{(t)} \right\} \right]$ represents the result of DFT performed on the channel impulse responses at the t-th tap of all fragments participating in offset compensation, $A^{(t)}$ represents the amplitude position corresponding to the $t$-th tap, $\max\limits_{1 \leq k \leq K_l} \left| \mathrm{DFT}\left[ \left\{ CIR_k^{(t)} \right\} \right] \right|$ represents that $\left| \mathrm{DFT}\left[ \left\{ CIR_k^{(t)} \right\} \right] \right|$ has the maximum value within the range $1 \leq k \leq K_l$, and $K_l$ represents the length of the channel impulse responses obtained after zero-padding the channel impulse responses of fragments participating in offset compensation.

It should be noted that the above explanation takes zero-padding for enhancing resolution as an example. In some embodiments, zero-padding may not be necessary, and the relevant processing is roughly the same as described here, except for the difference in data length (or "range"), which will not be elaborated here.

Then, based on the tap position corresponding to the maximum amplitude, the peak position corresponding to that tap position is determined. This can be achieved as follows:

$$t^* = \underset{t}{\mathrm{argmax}}\left|A^{(t)}\right|;$$

Here, $t^*$ represents the tap position corresponding to the maximum amplitude, $\underset{t'}{\mathrm{argmax}}\left|A^{(t)}\right|$ represents the value of $t$ at which $|A^{(t)}|$ has the maximum value, and $|A^{(t)}|$ represents the absolute value of $A^{(t)}$.

Finally, based on the peak position determined in the previous operation, the result of frequency offset estimation is determined. This can be achieved as follows:

$$f_c = \begin{cases} \dfrac{1}{T_{gap}} \cdot \dfrac{I^{(t^*)}}{K_l}, & I^{(t^*)} < \dfrac{K_l}{2} \\[2ex] \dfrac{1}{T_{gap}} \cdot \left( \dfrac{I^{(t^*)}}{K_l} - 1 \right), & I^{(t^*)} \geq \dfrac{K_l}{2} \end{cases};$$

Here, $f_c$ represents the result of frequency offset estimation, and $T_{gap}$ is a preset parameter which represents the CIR time interval.

It should be noted that the above is merely an example and does not imply that the frequency offset estimation in the embodiments of the present disclosure can only be achieved by the aforementioned method.

In operation 602, the time offset estimation is determined based on the frequency offset estimation and the pre-configured carrier frequency. Various implementation methods for time offset estimation have been recorded in related technologies, which are also applicable to this operation. Therefore, they will not be repeated here. For ease of understanding, an example will be provided below.

In some embodiments, determination of the time offset estimation based on the frequency offset estimation and the pre-configured carrier frequency may be implemented as follows:

$$C_{offs} = \frac{f_c}{f_s};$$

Here, $C_{offs}$ represents the result of time offset estimation in ppm, $f_c$ represents the result of frequency offset estimation, and $f_s$ represents the pre-configured carrier frequency.

In operation 603, frequency offset compensation is performed based on the frequency offset estimation, and/or time offset compensation is performed based on the time offset estimation. There are various methods for performing frequency offset compensation and time offset compensation after determining the results of the frequency offset estimation and the time offset estimation in related technologies. These methods are also applicable to this operation and will not be described in detail here. For clarity, only one example is provided below.

In some embodiments, frequency offset compensation is performed based on the frequency offset estimation can be implemented using the following expression:

$$CIR_k = CIR_k \cdot \exp\left( -j2\pi f_c T_{gap}(k-1) \right);$$

Here, $CIR_k$ represents the result of frequency offset compensation performed on the channel impulse response of the $k$-th fragment participating in offset compensation, $CIR_k$ represents the channel impulse response of the $k$-th fragment participating in offset compensation, $f_c$ represents the result of frequency offset estimation, and $T_{gap}(k-1)$ represents the CIR time interval corresponding to the channel impulse response of the $(k-1)$-th fragment participating in offset compensation.

In some embodiments, the time offset compensation may be achieved using a Farrow filter, where the result of time offset estimation $C_{offs}$ or a result obtained by further processing is configured as a parameter for the Farrow filter. Consequently, after passing through the Farrow filter, the channel impulse response of each fragment participating in offset compensation is adjusted, in the time domain, to $-(k-1)C_{offs}$ to obtain the corresponding result of performing time offset compensation.

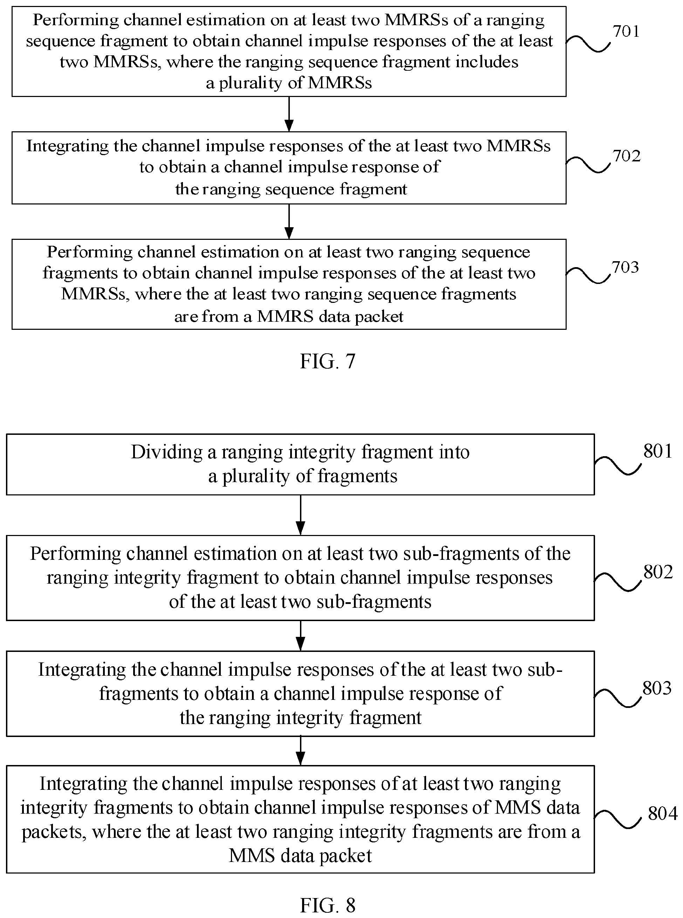

On the basis of the aforementioned embodiments, it can further be understood that, as shown in FIG. 3, each of the ranging sequence fragments includes a plurality of MMRS. Similar to the ranging sequence fragment and the ranging integrity fragment, the total signal energy of MMRS, as a sub-fragment, may also be increased by integration, thereby further enhancing ranging sensitivity. Based on this, in some embodiments, as shown in FIG. 7, the channel estimation method for UWB ranging includes the following operations:

Operation 701: performing channel estimation on at least two MMRSs of a ranging sequence fragment to obtain the channel impulse responses of the at least two MMRSs, where the ranging sequence fragment includes a plurality of MMRSs.

Operation 702: integrating the channel impulse responses of the at least two MMRSs to obtain the channel impulse response of the ranging sequence fragment.

Operation 703: integrating the channel impulse responses of at least two ranging sequence fragments to obtain the channel impulse response of a MMS data packet, where the at least two ranging sequence fragments originate from the MMS data packet.

On the basis of the aforementioned embodiments, by further integrating the channel impulse responses of at least two MMRSs of the same ranging sequence fragment, a channel impulse response of the ranging sequence fragment having higher energy can be obtained, thereby further increasing the energy of the channel impulse response of the MMS data packet, which is conducive to achieving ranging with higher sensitivity and other processing.

Furthermore, since the division of MMRS is inherently based on the internal structure of the ranging sequence fragment, no additional division operations are required, enabling more efficient and rapid processing. As MMRS are not formed through extra division, processing based on MMRS yields results less susceptible to subjective factors such as division length, thereby ensuring greater accuracy and reliability.

To facilitate understanding of the embodiment shown in FIG. 7, the operations are explained below. Operation 703 is substantially identical to the previously described operation 402 and is therefore not repeated here.

In operation 701, performing channel estimation on at least two MMRSs of a ranging sequence fragment to obtain the channel impulse responses of the at least two MMRSs, where the ranging sequence fragment includes a plurality of MMRSs. The embodiments of the present disclosure do not limit the number of MMRSs on which the channel estimation is performed, which may be 2, 5, 10, etc., or the channel estimation may be performed on even all MMRSs of the ranging sequence fragment.

Furthermore, it can be understood that each MMRS in operation 701 is used as an individual reception signal for channel estimation. Therefore, the scheme for channel estimation based on the reception signals recorded in related technologies is also applicable to the implementation of operation 501, and will not be repeated here.

In operation 702, integrating the channel impulse responses of the at least two MMRS to obtain the channel impulse response of the ranging sequence fragment. As previously described, the channel impulse responses of the at least two MMRSs of the ranging sequence fragment are generated separately, and through the integration processing in this operation, the channel impulse responses of different MMRSs are combined, thereby obtaining the channel impulse response of the ranging sequence fragment. Compared to direct simple concatenation, through integration, the channel impulse response will have higher energy, thus supporting ranging with higher sensitivity.

It is noted that integration includes coherent integration and incoherent integration, both of which are applicable to this operation. Incoherent integration offers simplicity, efficiency, and good real-time performance, and coherent integration offers minimal performance loss. Selection may be made based on application scenarios and user requirements.

It can be seen that the integration process in this operation is roughly the same as the integration process in operation 402 as mentioned above, with the main difference being the object of integration. Therefore, the implementation of this operation may refer to the implementation of operation 402. For example, before integrating the channel impulse responses of at least two MMRSs, the following operations may be introduced: compensating for the offset between the channel impulse responses of the at least two MMRSs. In this way, the offset between signals can be eliminated, sensitivity can be further improved, interference caused by inconsistent offsets can be prevented, and results of the subsequent processing can be more accurate and reliable. Correspondingly, integrating the channel impulse responses of the at least two MMRSs can be achieved by coherently integrating the compensated channel impulse responses of the at least two MMRSs. Further details are not repeated here.

Furthermore, FIG. 7 shows merely an example. In some embodiments, considering the extremely short time interval between MMRSs of a ranging sequence fragment, their influence may be negligible in certain scenarios. Therefore, instead of performing offset compensation on the channel impulse responses of different MMRSs of a single ranging sequence fragment, they may be directly integrated. Alternatively, the ranging sequence fragment may be treated as a whole for channel estimation, etc. Further details are not repeated here.

On the basis of the aforementioned embodiments, it can be understood that, as shown in FIG. 3, although each ranging integrity fragment is a scrambled timestamp sequence fragment, the total energy of the channel impulse responses of the scrambled timestamp sequence can still be increased through integration to further improve ranging sensitivity. Accordingly, in some embodiments, as shown in FIG. 8, the channel estimation method for UWB ranging includes the following operations:

Operation 801: dividing a ranging integrity fragment into a plurality of sub-fragments. When dividing the RIF into sub-fragments, RMARKER separation may be used to ensure that each sub-fragment corresponds to an independent integrity window.

Operation 802: performing channel estimation on at least two sub-fragments of the ranging integrity fragment to obtain channel impulse responses of the at least two sub-fragments.

Operation 803: integrating the channel impulse responses of the at least two sub-fragments to obtain the channel impulse response of the ranging integrity fragment.

Operation 804: integrating the channel impulse responses of at least two ranging integrity fragments to obtain the channel impulse response of the MMS data packet, where the at least two ranging integrity fragments originate from the MMS data packet.

On the basis of the aforementioned embodiments, by further dividing the ranging integrity fragment and integrating the channel impulse responses of the at least two sub-fragments obtained from the division, a channel impulse response of the ranging integrity fragment having higher energy can be obtained, thereby further increasing the energy of the channel impulse response of the MMS data packets and achieving the ranging with higher sensitivity.

In addition, by forming the sub-fragments through additional division, the division can be more flexible and variable, which can better adapt to various scenarios and user needs, resulting in a better user experience.

To facilitate understanding of the embodiment shown in FIG. 8, the operations are explained below. Operation 604 is substantially identical to the aforementioned operation 402 and is therefore not described in detail here.

In operation 801, dividing the ranging integrity fragment into multiple sub-fragments. In the embodiments of the present disclosure, the obtained sub-fragments have essentially the same length, allowing for integration based on the sub-fragments having the same length.

It should be noted that the embodiments of the present disclosure do not impose specific length restrictions on the sub-fragments; their length may be configured according to application scenarios, user requirements, and other factors. In some embodiments, the length of the sub-fragments may be set equal to the length of MMRSs of the ranging sequence fragment. This ensures that the channel impulse response of the ranging sequence fragment obtained by integration has the same length as that of the channel impulse response of the ranging integrity fragment, enabling subsequent security ranging verification. Of course, the lengths of the sub-fragments need not necessarily match the lengths of the MMRSs of the ranging integrity fragment, and the channel impulse responses may be aligned using other processing methods in subsequent processing, which will not be elaborated upon here.

It should also be noted that in the last division, a sub-fragment of the required length and a sub-fragment of a length shorter than the required length may be obtained. In this case, the shorter sub-fragment may be discarded. Further details are not be repeated here.

In operation 802, performing channel estimation on at least two sub-fragments of the ranging integrity fragment respectively to obtain the channel impulse responses of these sub-fragments. The number of sub-fragments subjected to channel estimation is not limited in the embodiments of the present disclosure, which may be 2, 5, 10, or the channel estimation may be performed on even all sub-fragments of the ranging integrity fragment.

Additionally, it should be understood that each of the sub-fragments in operation 802 undergoes channel estimation as an individual reception signal. Therefore, the channel estimation scheme based on reception signals described in related technologies is also applicable to the implementation of operation 802, and thus will not be elaborated on here.

In operation 803, integrating the channel impulse responses of the at least two sub-fragments to obtain the channel impulse response of the ranging integrity fragment. As previously described, the channel impulse responses of the at least two sub-fragments of the ranging integrity fragment are generated separately. Through the integration process in this operation, the channel impulse responses of different sub-fragments are combined, thereby obtaining the channel impulse response of the ranging integrity fragment. Moreover, compared to simple direct concatenation, the channel impulse response obtained by integration can have higher energy, enabling support for ranging with higher sensitivity.

It should also be noted that integration includes coherent integration and incoherent integration, both of which are applicable to this operation. Incoherent integration offers simplicity, efficiency, and good real-time performance, and coherent integration offers minimal performance loss. Selection may be made based on the application scenarios and the user requirements.

Thus, it can be seen that the integration processing in this operation is roughly the same as the integration processing in operation 402 as mentioned above, with the main difference being the object of integration. Therefore, the implementation of this operation may refer to the implementation of operation 402. For example, before integrating the channel impulse responses of the at least two sub-fragments, the following operations may be introduced: compensating for the offset between the channel impulse responses of the at least two sub-fragments. In this way, the offset between signals can be eliminated, sensitivity can be further improved, interference caused by inconsistent offsets can be prevented, and results of the subsequent processing can be more accurate and reliable. Correspondingly, integrating the channel impulse responses of the at least two sub-fragments can be achieved by coherently integrating the compensated channel impulse responses of the at least two sub-fragments. Further details are not be repeated here.

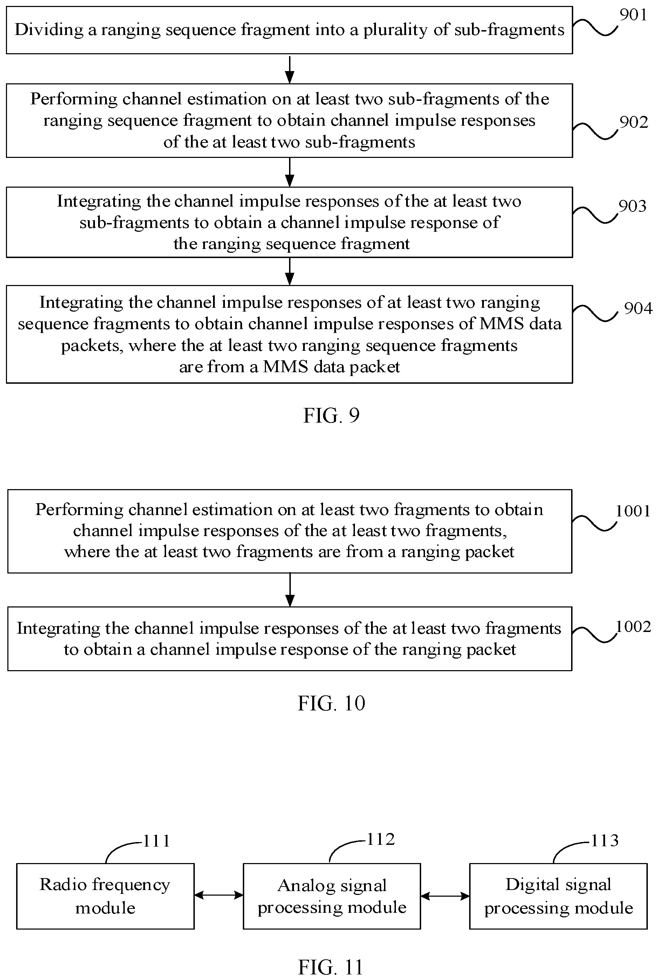

On the basis of the aforementioned embodiments, in order to further achieve flexible integration of channel impulse responses, the ranging sequence fragment may be directly treated as a whole without considering its internal division of MMRSs. Based on this, in some embodiments, as shown in FIG. 9, the channel estimation method for UWB ranging includes the following operations:

Operation 901: dividing a ranging sequence fragment into a plurality of sub-fragments.

Operation 902: performing channel estimation on at least two sub-fragments of the ranging sequence fragment to obtain channel impulse responses of the at least two sub-fragments.

Operation 903: integrating the channel impulse responses of the at least two sub-fragments to obtain the channel impulse response of the ranging sequence fragment.

Operation 904: integrating the channel impulse responses of at least two ranging sequence fragments to obtain the channel impulse response of the MMS data packet, where the at least two ranging sequence fragments originate from the MMS data packet.

On the basis of the aforementioned embodiments, the division of MMRSs of the ranging sequence fragment is disregarded, and the fragment is divided as a whole. This enables more flexible division, facilitating better division results. Consequently, based on improved division, more accurate and reliable channel impulse responses of the fragments can be obtained, thereby obtaining more precise and reliable channel impulse responses of the MMS data packet, and achieving more accurate and reliable ranging.

It is readily apparent that operations 901-904 are substantially similar to operations 801-804 as described above, with the primary distinction being the different objects of division and integration. Therefore, the implementation of operations 901-904 may refer to the implementation of operations 801-804 as described above. For example, operations 901-904 may also include offset compensation. Specifically, before integrating the channel impulse responses of at least two sub-fragments, the following operation may be introduced: compensating for the offset between the channel impulse responses of the at least two sub-fragments. In this way, the offset between signals can be eliminated, sensitivity can be further improved, interference caused by inconsistent offsets can be prevented, and results of the subsequent processing can be more accurate and reliable. Correspondingly, the integration of channel impulse responses of the at least two sub-fragments can be achieved by coherently integrating the compensated channel impulse responses of the at least two sub-fragments. Further details are not repeated here.

To facilitate understanding of the effect of the channel estimation method for UWB ranging provided in the above embodiments, the following explanation is provided in conjunction with relevant simulation experiments.

The ranging packet transmitted in the simulation experiment includes: 8 ranging sequence fragments and 8 ranging integrity fragments. The sensitivity of RF receiver is degraded by 10 dB, meaning that the Signal-to-Noise Ratio (SNR) for each fragment exceeds the sensitivity. Furthermore, no offset is introduced in the 8 ranging sequence fragments, and a random phase offset is introduced in the 8 ranging integrity fragments. The aforementioned MMS data packet is transmitted according to the relevant protocol. Since the offset is introduced in the ranging integrity fragments, a detection method from security ranging is also implemented at the receiver to detect the ranging integrity fragment.

At the receiver, the ranging processing is performed using the channel estimation method for UWB ranging adopting coherent integration provided in the above embodiment. For the received 8 ranging sequence fragments, the channel impulse response module reports correct results with low background noise. However, the 8 ranging integrity fragments cannot be combined normally, and the channel impulse response module reports an anomaly, returning a failed response indicating that the security ranging verification has not passed.

It should also be understood that the above description primarily pertains to the field of UWB technology. In the wireless ranging field, technologies such as Wi-Fi ranging and Bluetooth ranging employ ranging principles identical or similar to those of UWB. Therefore, the aforementioned solution is also applicable to ranging solutions in these fields. That is, in some embodiments, as illustrated in FIG. 10, the channel estimation method for wireless ranging may include the following operations:

Operation 1001: performing channel estimation on at least two fragments to obtain channel impulse responses of the at least two fragments, where the at least two fragments originate from a same ranging packet.

Operation 1002: integrating the channel impulse responses of the at least two fragments to obtain a channel impulse response of the ranging packet.

The effect and specific implementation of this method are substantially the same as those described in the preceding embodiments of the channel estimation method for UWB ranging. Therefore, further detailed descriptions are not repeated here.

Based on the above embodiments, a CIR coherent combining method are also provided. This method is applicable to UWB ranging using a format of a frame data packet, where the frame data packet includes a plurality of non-contiguous fragments. The following describes this method in conjunction with different embodiments.

In some embodiments, the CIR coherent combining method may include the following operations: for one respective fragment of the plurality of fragments, a total time window for CIR estimation is divided (such as uniformly divided) into a plurality of sub-fragment time windows, or the acquired total time window for CIR includes a plurality of sub-fragment time windows (e.g., the time windows having the same length); performing CIR estimation within the plurality of sub-fragment time windows to obtain sub-fragments CIRs; acquiring a fragment frequency offset and/or a fragment time offset based on the sub-fragments CIRs within the respective fragment; compensating for the sub-fragments CIRs using the fragment frequency offset and/or the fragment time offset; and performing coherent combining based on the sub-fragments CIRs or at least some of the compensated sub-fragments CIRs to obtain the total CIR of the respective fragment.

In some embodiments, the CIR coherent combining method may include the following operations: for one respective frame, dividing a total time window for CIR estimation into a plurality of sub-frame time windows with fragment as the basic unit; performing CIR estimation within the sub-frame time window to obtain sub-frames CIRs; acquiring the frame frequency offset and/or the frame time offset based on the sub-frames CIRs within the respective frame; compensating the sub-frame CIRs using the frame frequency offset and/or the frame time offset; and performing coherent combining based on the compensated sub-frames CIRs to obtain the total CIR for the respective frame.

It is not difficult to find that the above-mentioned CIR coherent combining method corresponds to the channel estimation method as mentioned above, and they are implemented in conjunction with each other. The relevant technical details mentioned in the implementation examples of the channel estimation method mentioned above are still valid in the implementation examples of CIR coherent combining method. To avoid redundancy, these details are not repeated here. Correspondingly, the relevant technical details mentioned in the implementation examples of the CIR coherent combining method can also be applied to the corresponding implementation examples of the channel estimation method as mentioned above.

In some embodiments, when performing coherent combining on one respective frame, subsequent frame CIR combining may also be performed based on the total CIR of the sub-fragments obtained by sub-fragment coherent combining as described above.

In some embodiments, the CIR coherent combining solution in the embodiments of the present disclosure may be applied to receivers such as UWB, WiFi, Bluetooth, etc., i.e., for scenarios or systems requiring ranging based on the channel estimation results. If factors such as the frequency offset and/or the time offset affect the effect of direct coherent combining due to a long time span, the technical solutions of CIR coherent combining in the present disclosure, combined with technical knowledge that a person skilled in the art should possess, can be used to implement the solutions and solve the aforementioned problems.

The division of operations in the various methods above is for clarity only. During implementation, operations may be combined into a single operation or certain operations may be split into multiple operations. As long as the same logical relationships are maintained, they remain within the scope of protection of the present disclosure. Minor modifications to the algorithm or process, or the introduction of minor design elements that do not alter the core design of the algorithm or process, also fall within the scope of the present disclosure.

Furthermore, an embodiment of the present disclosure further provides an integrated circuit, as shown in FIG. 11, including a radio frequency module 111, an analog signal processing module 112, and a digital signal processing module 113 connected in series.

The RF module 111 is configured to receive analog signals. The analog signal processing module 112 is configured to perform down-conversion processing on the received analog signals to obtain intermediate frequency (IF) signals. The digital signal processing module 113 is configured to perform analog-to-digital conversion (ADC) on the IF signals and to perform digital signal processing on the data obtained from the ADC. The digital signal processing performed by the digital signal processing module 113 includes: the channel estimation method for UWB ranging as described in any embodiment of the present disclosure, or the channel estimation method for wireless ranging as described in any embodiment of the present disclosure, or the CIR coherent combining method as described in any embodiment of the present disclosure.

It is readily apparent that this embodiment is a circuit embodiment corresponding to the method embodiment, and this embodiment can be implemented in conjunction with the method embodiment. The relevant technical details mentioned in the method implementation examples are still valid in this implementation example, and in order to reduce repetition, they are be repeated here. Correspondingly, the relevant technical details mentioned in this embodiment can also be applied in the method embodiments.

In addition, in order to highlight the innovative aspects of the present disclosure, this embodiment does not include units that are not closely related to solving the technical problems proposed herein. However, this does not mean that there are no other units in this embodiment.

The present disclosure also provides an electromagnetic wave sensor including: a carrier body; the integrated circuit as described above, disposed on the carrier body; an antenna disposed on the carrier body, or an antenna integrated with the integrated circuit as a single device disposed on the carrier body; where the integrated circuit is connected to the antenna for transmitting and receiving signals.

The present disclosure further provides a terminal device including: a device body; and the electromagnetic wave sensor as described above, disposed on the device body; where the electromagnetic wave sensor is used for target detection and/or communication to provide reference information for the operation of the device body.

It will be understood by those skilled in the art that the above embodiments are specific implementations for carrying out the present disclosure, and in practical applications, various modifications may be made in form and details without departing from the spirit and scope of the present disclosure.

**Claims**

1. A channel estimation method for Ultra-Wideband, UWB, ranging, comprising:

   performing channel estimation on at least two fragments respectively to obtain channel impulse responses, CIRs, of the at least two fragments, wherein the at least two fragments originate from a same multi-millisecond, MMS, data packet; and
   integrating the channel impulse responses of the at least two fragments to obtain a channel impulse response of the MMS data packet.

2. The channel estimation method according to claim 1, wherein before integrating the channel impulse responses of the at least two fragments, the method further comprises:

   compensating for an offset between the channel impulse responses of the at least two fragments;
   wherein integrating the channel impulse responses of the at least two fragments comprises:
   coherently integrating compensated channel impulse responses of the at least two fragments.

3. The channel estimation method according to claim 1, wherein the at least two fragments comprise at least one ranging sequence fragment, a respective ranging sequence fragment of the at least one ranging sequence fragment comprises a plurality of repetitive multi-millisecond ranging sequences, MMRSs, and performing channel estimation on the at least two fragments respectively to obtain the channel impulse responses of the at least two fragments comprises:

   performing channel estimation on at least two MMRSs of the plurality of MMRSs to obtain channel impulse responses of the at least two MMRSs; and
   integrating the channel impulse responses of the at least two MMRSs to obtain a channel impulse response of the respective ranging sequence fragment.

4. The channel estimation method according to claim 3, further comprising:

   compensating for an offset between the channel impulse responses of the at least two MMRSs;
   wherein integrating the channel impulse responses of the at least two MMRSs comprises:
   coherently integrating compensated channel impulse responses of the at least two MMRSs.

5. The channel estimation method according to claim 1, wherein the at least two fragments comprise at least one ranging integrity fragment, and performing channel estimation on the at least two fragments respectively to obtain the channel impulse responses of the at least two fragments comprises:

   dividing a respective ranging integrity fragment of the at least one ranging integrity fragment into a plurality of sub-fragments;
   performing channel estimation on at least two sub-fragments of the plurality of sub-fragments to obtain channel impulse responses of the at least two sub-fragments; and
   integrating the channel impulse responses of the at least two sub-fragments to obtain a channel impulse response of the respective ranging integrity fragment.

6. The channel estimation method according to claim 5, further comprising:

   compensating for an offset between the channel impulse responses of the at least two sub-fragments;

wherein integrating the channel impulse responses of the at least two sub-fragments comprises:

coherently integrating compensated channel impulse responses of the at least two sub-fragments.

7. The channel estimation method according to claim 1, wherein the at least two fragments comprise at least one ranging sequence fragment, and performing channel estimation on the at least two fragments respectively to obtain the channel impulse responses of the at least two fragments comprises:

dividing a respective ranging sequence fragment of the at least one ranging sequence fragment into a plurality of sub-fragments; performing channel estimation on at least two sub-fragments of the respective ranging sequence fragment to obtain channel impulse responses of the at least two sub-fragments; and integrating the channel impulse responses of the at least two sub-fragments to obtain a channel impulse response of the respective ranging sequence fragment.

8. The channel estimation method according to claim 7, wherein before integrating the channel impulse responses of the at least two sub-fragments, the method further comprises:

compensating for an offset between the channel impulse responses of the at least two sub-fragments;

wherein integrating the channel impulse responses of the at least two sub-fragments comprises:

coherently integrating compensated channel impulse responses of the at least two sub-fragments.

9. The channel estimation method according to any one of claims 4, 6, and 8, wherein compensating for an offset comprises:

determining a frequency offset estimation; determining a time offset estimation based on the frequency offset estimation and a carrier frequency for the MMS data packet; and performing frequency offset compensation based on the frequency offset estimation, and/or performing time offset compensation based on the time offset estimation.

10. The channel estimation method according to any one of claims 1 to 9, wherein the at least two fragments comprise all ranging sequence fragments of the MMS data packet, or the at least two fragments comprise all ranging integrity fragments of the MMS data packet.

11. The channel estimation method according to any one of claims 1 to 10, wherein the MMS data packet comprises a fragment having a synchronization header, SHR, and the SHR comprises a synchronization field, SYNC, and a start frame delimiter, SFD; and

wherein the SHR is a fragment exchanged between a ranging initiator and a ranging responder during a one-to-many multi-millisecond ranging process and an out-of-band channel multi-millisecond ranging process.

12. A channel estimation method for wireless ranging, comprising:

performing channel estimation on at least two fragments respectively to obtain channel impulse responses of the at least two fragments, wherein the at least two fragments originate from a same ranging packet; and accumulating the channel impulse responses of the at least two fragments to obtain a channel impulse response of the ranging packet.

13. A coherent combining method for channel impulse response, applicable to UWB ranging using a format of a frame data packet, wherein the frame data packet comprises a plurality of non-contiguous fragments, and a total time window for CIR estimation of a respective fragment of the plurality of fragments comprises a plurality of sub-fragment time windows; the coherent combining method comprises:

performing CIR estimation within the plurality of sub-fragment time windows to obtain sub-fragment CIRs; acquiring at least one of a fragment frequency offset and a fragment time offset based on the sub-fragment CIRs within the respective fragment; compensating for the sub-fragment CIRs using at least one of the fragment frequency offset and the fragment time offset; and performing coherent combining based on compensated sub-fragment CIRs to obtain a total CIR of the respective fragment; and/or,

wherein a total time window for CIR estimation of a respective frame comprises a plurality of subframe time windows with fragment as a basic unit;

the coherent combining method comprises:

performing CIR estimation within the plur-

31 **EP 4 773 555 A1** 32

ality of sub-frame time windows to obtain sub-frame CIRs;

acquiring at least one of a frame frequency offset and a frame time offset based on the sub-frame CIRs within the respective frame;

compensating for the sub-frame CIRs using at least one of the frame frequency offset and the frame time offset; and

performing coherent combining based on compensated sub-frame CIRs to obtain a total CIR of the respective frame.

14. An integrated circuit, comprising a radio frequency module, an analog signal processing module, and a digital signal processing module connected in series;

  wherein the radio frequency module is configured to receive analog signals;

  the analog signal processing module is configured to perform down-conversion processing on the analog signals to obtain intermediate frequency signals; and

  the digital signal processing module is configured to perform analog-to-digital conversion on the intermediate frequency signals, and to perform digital signal processing on data obtained from the analog-to-digital conversion, wherein the digital signal processing performed by the digital signal processing module comprises operations of the channel estimation method according to any one of claims 1 to 11, of the channel estimation method according to claim 12, or of the coherent combining method according to claim 13.

15. An electromagnetic wave sensor, comprising:

  a carrier body;

  the integrated circuit according to claim 14 that is disposed on the carrier body; and

  an antenna, wherein the antenna is disposed on the carrier body or the antenna and the integrated circuit are integrated into an integrated device disposed on the carrier body;

  wherein the integrated circuit is connected to the antenna for transmitting and receiving signals.

16. A terminal device, comprising:

  a device body; and

  the electromagnetic wave sensor according to claim 15 that is disposed on the device body;

  wherein the electromagnetic wave sensor is configured for at least one of target detection and communication to provide reference information for operations of the device body.

17

| | O-QPSK | UWB BPRFND | NBA-MMS | | |
|---|---|---|---|---|---|
| | | | 1ms | 4ms | 8ms |
| TxPwr (dBm) | 14 | −7.8 | −7.8 | −7.8 | −7.8 |
| Theoretical Sens. (dBm) | −113 | −111 | −120.4 | −126.4 | −129.0 |
| Implementation Loss (dBm) | 12 | 12 | 12 | 12 | 12 |
| ActualSens.(dBm) | −101 | −99 | −108.4 | −114.4 | −117 |
| Path Loss (dB) | 0 | 1 | 1 | 1 | 1 |
| LinkBudget (dB) | 115 | 90.2 | 99.6 | 105.6 | 108.2 |

FIG. 1

FIG. 2

FIG. 3

Performing channel estimation on at least two fragments to obtain channel impulse responses of the at least two fragments, where the at least two fragments originate from a same MMS data packet ⟋401

Integrating the channel impulse responses of the at least two fragments to obtain the channel impulse response of the MMS data packet ⟋402

FIG. 4

Performing channel estimation on at least two fragments to obtain channel impulse responses of the at least two fragments, where the at least two fragments originate from a same MMS data packet ⟋501

Compensating for an offset between the channel impulse responses of the at least two segments ⟋502

Coherently integrating the compensated channel impulse responses of the at least two fragments to obtain channel impulse response of the MMS data packet ⟋503

FIG. 5

Determining a frequency offset estimate ⟋601

Determining a time offset estimate based on the frequency offset estimate and preset carrier frequency ⟋602

Performing frequency offset compensation based on the frequency offset estimate, and/or performing time offset compensation based on the time offset estimate ⟋603

FIG. 6

Performing channel estimation on at least two MMRSs of a ranging sequence fragment to obtain channel impulse responses of the at least two MMRSs, where the ranging sequence fragment includes a plurality of MMRSs

701

Integrating the channel impulse responses of the at least two MMRSs to obtain a channel impulse response of the ranging sequence fragment

702

Performing channel estimation on at least two ranging sequence fragments to obtain channel impulse responses of the at least two MMRSs, where the at least two ranging sequence fragments are from a MMRS data packet

703

FIG. 7

Dividing a ranging integrity fragment into a plurality of fragments

801

Performing channel estimation on at least two sub-fragments of the ranging integrity fragment to obtain channel impulse responses of the at least two sub-fragments

802

Integrating the channel impulse responses of the at least two sub-fragments to obtain a channel impulse response of the ranging integrity fragment

803

Integrating the channel impulse responses of at least two ranging integrity fragments to obtain channel impulse responses of MMS data packets, where the at least two ranging integrity fragments are from a MMS data packet

804

FIG. 8

Dividing a ranging sequence fragment into a plurality of sub-fragments $\sim$ 901

Performing channel estimation on at least two sub-fragments of the ranging sequence fragment to obtain channel impulse responses of the at least two sub-fragments $\sim$ 902

Integrating the channel impulse responses of the at least two sub-fragments to obtain a channel impulse response of the ranging sequence fragment $\sim$ 903

Integrating the channel impulse responses of at least two ranging sequence fragments to obtain channel impulse responses of MMS data packets, where the at least two ranging sequence fragments are from a MMS data packet $\sim$ 904

FIG. 9

Performing channel estimation on at least two fragments to obtain channel impulse responses of the at least two fragments, where the at least two fragments are from a ranging packet $\sim$ 1001

Integrating the channel impulse responses of the at least two fragments to obtain a channel impulse response of the ranging packet $\sim$ 1002

FIG. 10

| Radio frequency module | | Analog signal processing module | | Digital signal processing module |

111    112    113

FIG. 11

## INTERNATIONAL SEARCH REPORT

| International application No. |
|---|
| **PCT/CN2025/109424** |

**A. CLASSIFICATION OF SUBJECT MATTER**

H04L25/02(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNTXT, ENTXTC, VEN, DWPI: 测距, 测距包, 超宽带, 段, 多, 多毫秒, 估计, 合并, 积累, 累积, 累加, 两, 脉冲响应, 片, 片段, 无线, 信道, 信道估计, 信道脉冲响应, channel, impulse, MMS, pulse, sum, two, UWB, segment?, piece?, add+, merg +, accumulat+, ultra-wideband, paragraph?, measur+, estimat+, multi-millisecond, combin+, part?, respon+, rang+, section?

**C. DOCUMENTS CONSIDERED TO BE RELEVANT**

| Category* | Citation of document, with indication, where appropriate, of the relevant passages | Relevant to claim No. |
|---|---|---|
| PX | WO 2025014607 A1 (QORVO US, INC.) 16 January 2025 (2025-01-16) description, paragraphs 6-9 and 28-107, and figures 1-14 | 1-16 |
| X | CN 117641234 A (APPLE INC.) 01 March 2024 (2024-03-01) description, paragraphs 6-17 and 45-179, and figures 1A-21 | 1-16 |
| X | US 2015094082 A1 (QUALCOMM INC.) 02 April 2015 (2015-04-02) description, paragraphs 2-48 and 65-159, and figures 1A-9 | 12, 14-16 |
| Y | US 2015094082 A1 (QUALCOMM INC.) 02 April 2015 (2015-04-02) description, paragraphs 2-48 and 65-159, and figures 1A-9 | 1-11, 13-16 |
| Y | US 2022140971 A1 (APPLE INC.) 05 May 2022 (2022-05-05) description, paragraphs 43-186, and figures 1-39 | 1-11, 13-16 |
| A | CN 116782116 A (HUAWEI TECHNOLOGIES CO., LTD.) 19 September 2023 (2023-09-19) entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 September 2025** | **16 September 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/109424**

| Patent document cited in search report | | | Publication date (day/month/year) | Patent family member(s) | | | Publication date (day/month/year) |
|---|---|---|---|---|---|---|---|
| WO | 2025014607 | A1 | 16 January 2025 | TW | 202522912 | A | 01 June 2025 |
| CN | 117641234 | A | 01 March 2024 | US | 2024073856 | A1 | 29 February 2024 |
| | | | | EP | 4343376 | A2 | 27 March 2024 |
| | | | | IN | 202314056316 | A | 01 March 2024 |
| US | 2015094082 | A1 | 02 April 2015 | WO | 2015047936 | A1 | 02 April 2015 |
| US | 2022140971 | A1 | 05 May 2022 | US | 2024297758 | A1 | 05 September 2024 |
| CN | 116782116 | A | 19 September 2023 | WO | 2023169247 | A1 | 14 September 2023 |
| | | | | US | 2024430002 | A1 | 26 December 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410970217

- CN 202510957003